# EUROPEAN PATENT APPLICATION

(11) **EP 4 832 193 A1**
(43) Date of publication of application: **28.10.2026**
(21) Application number: 26164716.8
(22) Date of filing: 13.03.2026
(51) Int. Cl.: H01M 50/211, H01M 50/503, H01M 50/507, H01M 50/519

(54) **BATTERY MODULE**

(30) Priority: 25.03.2025 JP 2025050522
(71) Applicant: Toyota Jidosha Kabushiki Kaisha, Toyota-shi, Aichi-ken 471-8571 (JP)
(72) Inventor: YAMASHITA, Osamu, Toyota-shi, Aichi-ken 471-8571 (JP); ARAKAWA, Takuya, Toyota-shi, Aichi-ken 471-8571 (JP); IWATA, Makoto, Toyota-shi, Aichi-ken 471-8571 (JP); KIMURA, Kenta, Toyota-shi, Aichi-ken 471-8571 (JP); KIMURA, Ryo, Toyota-shi, Aichi-ken 471-8571 (JP); TSUNEKAWA, Kunihiro, Toyota-shi, Aichi-ken 471-8571 (JP); YANASE, Koichi, Toyota-shi, Aichi-ken 471-8571 (JP)
(74) Representative: Cabinet Beau de Loménie

(57) **Abstract**

A battery module includes: a first pouch battery cell and a second pouch battery cell, each including electrode tabs (70a,70c); a first bus bar and a second bus bar (70), one of the first bus bar and the second bus bar being connected to an electrode tab of the first pouch battery cell and the other being connected to an electrode tab of the second pouch battery cell; and a bus bar holder (74), wherein the bus bar holder includes: a first holding portion (76) configured to hold the first bus bar; a second holding portion (78) configured to hold the second bus bar; and a low-rigidity portion (82A,82B) located between the first holding portion and the second holding portion and configured to have a rigidity that is lower than a rigidity of at least one of the first holding portion and the second holding portion.

## Description

### BACKGROUND OF THE INVENTION

### 1. Field of the Invention

The technology disclosed in the present specification relates to a battery module, and more particularly to a battery module in which a plurality of pouch battery cells is stacked.

### 2. Description of Related Art

US Patent Application Publication No. 2017/0365887 discloses a battery module. This battery module includes a plurality of pouch battery cells disposed in a stack, and a plurality of bus bars arranged along the pouch battery cells. Each of the pouch battery cells includes an electrode tab, and electrode tabs of several pouch cells are connected to each of the bus bars.

### SUMMARY OF THE INVENTION

When manufacturing a battery module such as the one described above, it is necessary to constrain the pouch battery cells (hereinafter referred to as "pouch cells") disposed in a stack using a constraining device such as a case or a band while compressing the pouch cells along the stacking direction. When the pouch cells are compressed along the stacking direction, compressive deformation occurs in each of the pouch cells, causing the pouch cells to be displaced relative to each other along the stacking direction. At this time, the electrode tabs connected to the bus bars are also displaced relative to the bus bars, which creates a possibility that an unintended force acts on the electrode tabs. In particular, such a possibility increases since the amount of displacement of the electrode tabs relative to the bus bars is greater as the number of the stacked pouch cells is greater.

The present specification provides a technology that can suppress the application of an unintended force to electrode tabs connected to bus bars.

A first aspect of the present disclosure provides a battery module including: a first pouch battery cell and a second pouch battery cell stacked along a first direction and each including an electrode tab; a first bus bar and a second bus bar arranged along the first direction, one of the first bus bar and the second bus bar being connected to the electrode tab of the first pouch battery cell and the other being connected to the electrode tab of the second pouch battery cell; and a bus bar holder that holds the first bus bar and the second bus bar. The bus bar holder includes: a first holding portion configured to hold the first bus bar; a second holding portion configured to hold the second bus bar; and a low-rigidity portion located between the first holding portion and the second holding portion and configured to have a rigidity that is lower than a rigidity of at least one of the first holding portion and the second holding portion.

According to the above configuration, the bus bar holder includes the low-rigidity portion, allowing the first bus bar and the second bus bar held by the bus bar holder to be relatively displaced in the first direction. By relatively displacing the first bus bar and the second bus bar according to the relative displacement of the first pouch battery cell and the second pouch battery cell, the amount of relative displacement of the bus bars relative to the electrode tab can be suppressed. This makes it possible to suppress the application of an unintended force to the electrode tab.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically illustrates the configuration of an electrified vehicle;
FIG. 2 illustrates the configuration of a battery pack;
FIG. 3 illustrates a battery module as viewed from below;
FIG. 4 illustrates the configuration of the battery module;
FIG. 5 illustrates the battery module as viewed from the rear;
FIG. 6 illustrates a low-rigidity portion and a stopper mechanism at the time when a first abutment portion and a second abutment portion are spaced apart from each other;
FIG. 7 illustrates the low-rigidity portion and the stopper mechanism at the time when the first abutment portion and the second abutment portion abut against each other;
FIG. 8 illustrates a method of manufacturing the battery module;
FIG. 9 illustrates the method of manufacturing the battery module;
FIG. 10 illustrates the method of manufacturing the battery module;
FIG. 11 illustrates the method of manufacturing the battery module;
FIG. 12 illustrates a modification of a bus bar holder;
FIG. 13 illustrates a modification of the bus bar holder; and
FIG. 14 illustrates a modification of the bus bar holder.

### DETAILED DESCRIPTION OF EMBODIMENTS

In an embodiment of the present technology, the low-rigidity portion may include a beam that extends between the first holding portion and the second holding portion, and that is configured to be elastically deformable along the first direction. With such a configuration, it is possible to implement a low-rigidity portion that has the desired characteristics (for example, the desired elasticity) with a relatively simple configuration.

In the above embodiment, the beam may be provided with a protruding portion that is curved or bent so as to protrude in a second direction that is orthogonal to the first direction. With such a configuration, it is possible to implement a low-rigidity portion that is significantly deformable with a relatively simple configuration.

In an embodiment of the present technology, the bus bar holder may include a first holder member that includes the first holding portion and a second holder member that includes the second holding portion. In this case, the first holder member and the second holder member may be coupled so as to be relatively displaceable along the first direction, thereby constituting the low-rigidity portion. In this way, the bus bar holder may be constituted from a combination of a plurality of members, rather than from a single member.

In an embodiment of the present technology, the bus bar holder may include a stopper mechanism that inhibits or suppresses the low-rigidity portion from contracting beyond a predetermined value. The low-rigidity portion of the bus bar holder can exert its function and effect when the battery module is manufactured. On the other hand, in the completed battery module, for example, deformation of the low-rigidity portion may be inhibited or suppressed, thereby making it possible to suppress unnecessary vibration of the electrode tab, for example. In this regard, when the bus bar holder includes the stopper mechanism described above, deformation of the low-rigidity portion can be inhibited or suppressed in the completed battery module, for example.

In the above embodiment, the stopper mechanism may include a pair of abutment portions that abuts against each other when the low-rigidity portion contracts to the predetermined value. With such a configuration, the stopper mechanism having the above function can be implemented with a relatively simple configuration.

Additionally or alternatively, the bus bar holder may further include a second low-rigidity portion located between the first holding portion and the second holding portion and configured to have a rigidity that is lower than that of at least one of the first holding portion and the second holding portion. In this case, the second low-rigidity portion may be configured to be deformable along the first direction even in a state in which contraction of the low-rigidity portion is inhibited by the stopper mechanism. With such a configuration, in the completed battery module, for example, the second low-rigidity portion can be passively deformed in response to expansion or contraction of the pouch battery cells that occurs during use.

In an embodiment of the present technology, the battery module may further include a circuit board attached to the bus bar holder and connected to each of the first bus bar and the second bus bar. In this case, at least a part of the circuit board may be constituted from a flexible circuit board. With such a configuration, it is possible to suppress deformation of the low-rigidity portion of the bus bar holder being hindered by the circuit board.

### Embodiment

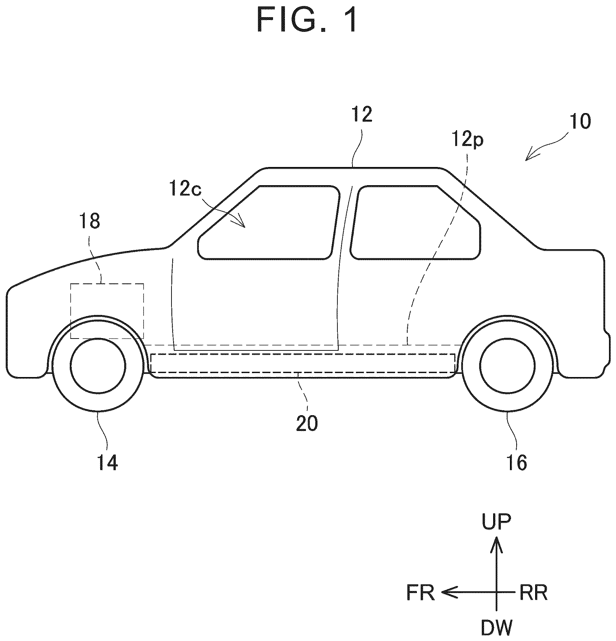

A battery module 50 according to an embodiment will be described with reference to FIGS. 1 to 11. The battery module 50 according to the present embodiment can be used in a battery pack 20 mounted on an electrified vehicle 10. The electrified vehicle 10 will be described with reference to FIG. 1. The electrified vehicle 10 is a battery electric vehicle (BEV). However, the electrified vehicle 10 is not limited to a BEV, and may be another type of electrified vehicle such as a hybrid electric vehicle (HEV) or a plug-in hybrid electric vehicle (PHEV).

Here, the directions of the battery module 50 in the drawings correspond to the directions with the battery module 50 mounted on the electrified vehicle 10, that is, the directions of the electrified vehicle 10. A direction FR indicates the forward direction in the front-rear direction of the electrified vehicle 10, and a negative direction RR of the direction FR indicates the rearward direction in the front-rear direction of the electrified vehicle 10. A direction LH indicates the leftward direction in the right-left direction of the electrified vehicle 10, and a negative direction RH of the direction LH indicates the rightward direction in the right-left direction of the vehicle. A direction UP indicates the upward direction in the up-down direction of the electrified vehicle 10, and a negative direction DW of the direction UP indicates the downward direction in the up-down direction of the electrified vehicle 10.

The electrified vehicle 10 includes a vehicle body 12, a plurality of wheels 14 and 16, and a motor unit 18, in addition to the battery pack 20. The vehicle body 12 is made of a metal as a steel-based material, an aluminum-based material, or the like, for example. The wheels 14 and 16 support the vehicle body 12. The wheels 14 and 16 include a pair of front wheels 14 located at the front of the vehicle body 12 and a pair of rear wheels 16 located at the rear of the vehicle body 12. The front wheels 14 are located on the right and left sides of the vehicle body 12, respectively. The rear wheels 16 are located on the right and left sides of the vehicle body 12, respectively. The vehicle body 12 has a cabin 12c inside. The cabin 12c is configured to accommodate an occupant. The vehicle body 12 includes a floor panel 12p. The floor panel 12p defines the floor of the cabin 12c.

The motor unit 18 includes a travel motor that drives the front wheels 14. However, the motor unit 18 is not limited to driving the front wheels 14, but may drive at least one of the wheels 14 and 16. The motor unit 18 may be disposed forward of the cabin 12c.

The battery pack 20 is electrically connected to the motor unit 18 via, for example, a power conversion device (not illustrated). The battery pack 20 supplies the motor unit 18 with power to drive the wheels 14 and 16. The battery pack 20 is disposed at the lower part of the vehicle body 12. Specifically, the battery pack 20 is disposed below the floor panel 12p of the vehicle body 12. The battery pack 20 is supported by the vehicle body 12. For example, the battery pack 20 may be fixed to the right and left side sills of the vehicle body 12.

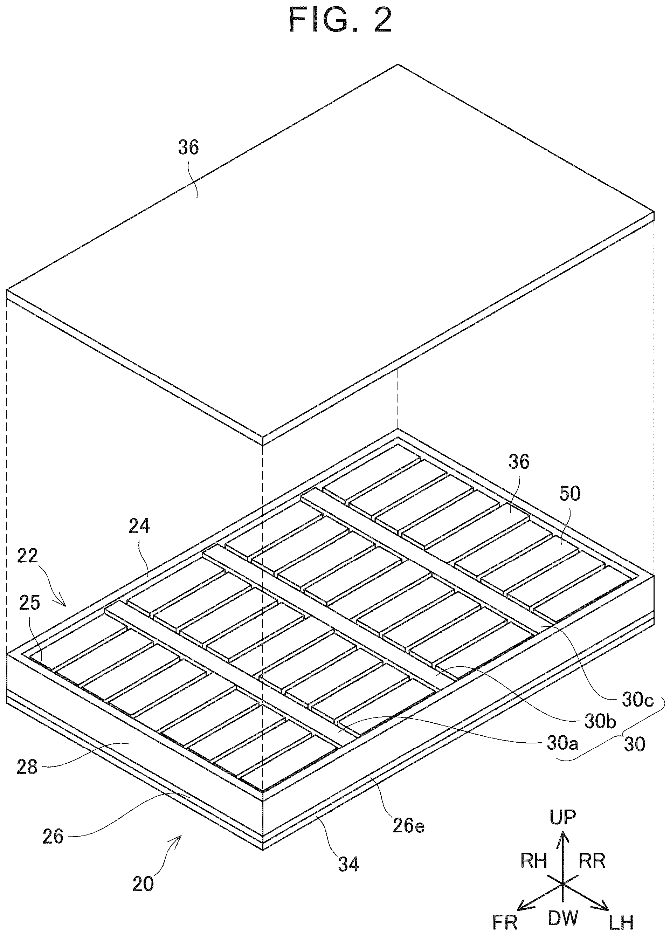

As illustrated in FIG. 2, the battery pack 20 is a thin battery pack having a short length in the vehicle height direction (i.e., the up-down direction). The battery pack 20 has a rectangular flat box shape. The battery pack 20 has a length in the front-rear direction that is longer than the length in the right-left direction.

The battery pack 20 includes a plurality of battery modules 50, a housing 22, a protective cover 34, and a top cover 36. The housing 22 houses the battery modules 50.

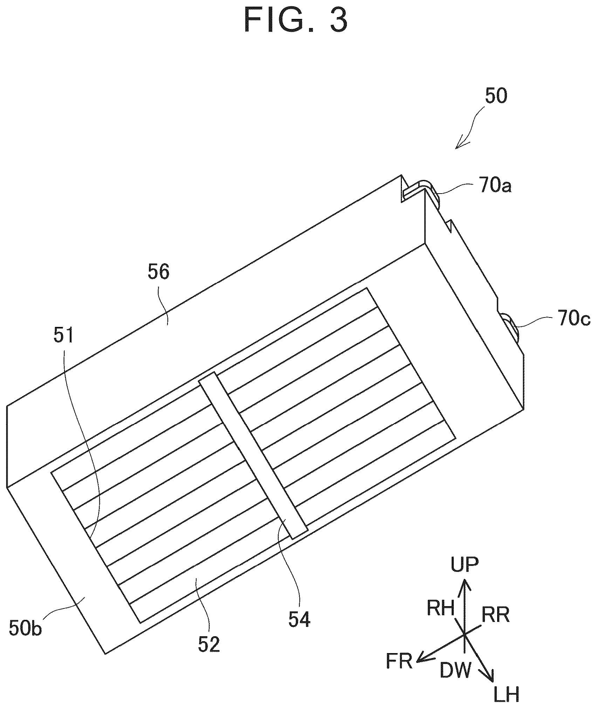

As illustrated in FIG. 3, the battery module 50 includes a plurality of battery cells 52. Each of the battery cells 52 is a secondary battery cell configured to be chargeable and dischargeable. The secondary battery cell is, for example, a lithium ion battery cell. The battery module 50 has an opening 51 in a lower surface 50b. On the lower surface 50b of each battery module 50, the end surfaces of the battery cells 52 are exposed through the opening 51. Each battery cells 52 is a pouch battery cell (also referred to as a laminate battery cell). Each battery cell 52 has a flat shape. The battery cells 52 are stacked along the thickness direction (the right-left direction in FIG. 3). The battery cells 52 are constrained by a constraining band 54 in the state of being compressed in the stacking direction. Each battery cell 52 has an elongated shape. The battery module 50 includes a positive electrode terminal 70a and a negative electrode terminal 70c at one end (rear end) of the battery cells 52 in the longitudinal direction (front-rear direction in FIG. 3). The battery module 50 includes a module casing 56 that houses the battery cells 52. The opening 51 is defined by the module casing 56. The module casing 56 is made of, for example, a resin.

The housing 22 is made of a metal such as aluminum, for example. As illustrated in FIG. 2, the housing 22 includes a housing body 24 and a plurality of beams 30a, 30b, 30c, and 32. The housing body 24 includes a bottom wall 26 on which the battery modules 50 are disposed, and a peripheral wall 28 standing upright from an outer peripheral edge 26e of the bottom wall 26. The peripheral wall 28 extends around the outer peripheral edge 26e of the bottom wall 26. The housing body 24 has an opening 25 that opens upward. The opening 25 is defined by the peripheral wall 28. The top cover 36 is a plate-shaped member and is disposed so as to close the opening 25 of the housing body 24 from above. The top cover 36 is made of a metal such as aluminum, for example. The protective cover 34 is a plate-shaped member that covers the bottom wall 26 from below. The protective cover 34 is made of, for example, a resin.

The beams 30a, 30b, 30c, and 32 are skeleton members of the housing 22. The beams 30a, 30b, 30c, and 32 extend along an upper surface 26a of the bottom wall 26. The beams 30a, 30b, 30c, and 32 include a plurality of first beams 30a, 30b, and 30c and a second beam 32. The first beams 30a, 30b, and 30c extend in the right-left direction so as to cross the upper surface 26a of the bottom wall 26. The first beams 30a, 30b, and 30c each extend from the left peripheral wall 28 to the right peripheral wall 28. The second beam 32 extends in the front-rear direction so as to cross the upper surface 26a of the bottom wall 26. The first beams 30a, 30b, and 30c are arranged at intervals in the front-rear direction. The second beam 32 is disposed at the center of the bottom wall 26 in the right-left direction. The first beams 30a, 30b, and 30c (hereinafter referred to as the first beams 30) are disposed orthogonally to the second beam 32. As illustrated in FIG. 2, the first beams 30 extend across the second beam 32. The first beams 30 and the second beam 32 are formed so as to be able to fit together. The beams 30 and 32 are fixed to the upper surface 26a of the bottom wall 26.

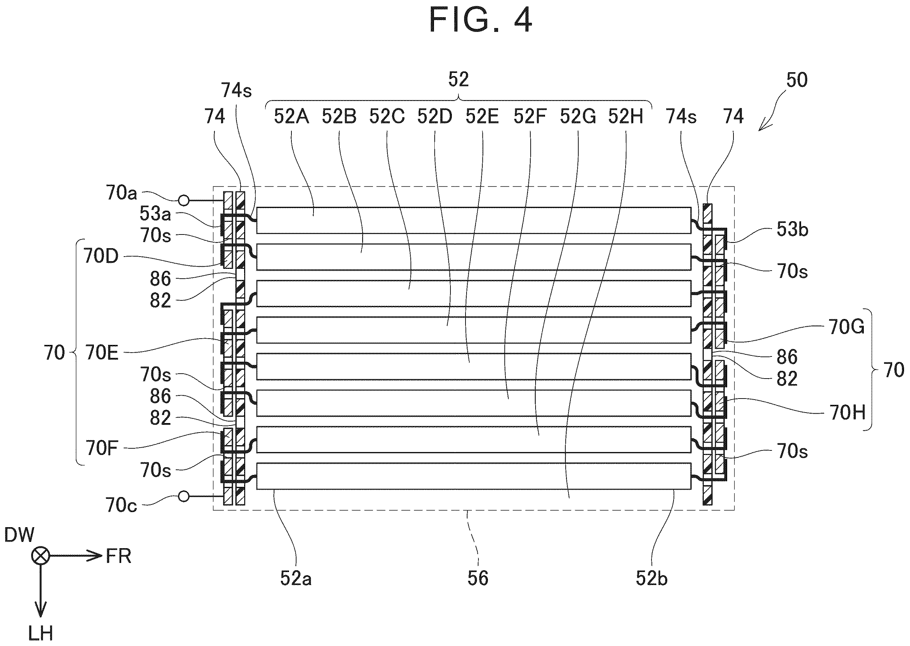

FIG. 4 illustrates the internal configuration of the module casing 56 of the battery module 50. As illustrated in FIG. 4, the battery module 50 includes, inside the module casing 56, end portions 52a and 52b of the battery cells 52 in the front-rear direction, a plurality of bus bars 70, and bus bar holders 74. Each battery cell 52 includes electrode tabs 53a and 53b at both end portions 52a and 52b. The bus bars 70 are made of a metal such as copper, for example. Each of the bus bars 70 located at the rear end portion 52a electrically connects two or more electrode tabs 53a, of the electrode tabs 53a of the battery cells 52. Each bus bar holder 74 holds the bus bars 70. The bus bar holders 74 are made of an insulating material such as a resin, for example. Each bus bar holder 74 has a plurality of slits 74s that penetrates the bus bar holder 74 in the front-rear direction. Each bus bar 70 has a plurality of slits 70s that penetrates the bus bar 70 in the front-rear direction, as with the bus bar holder 74. At the rear end portion 52a, each electrode tab 53a passes through the slit 74s of the bus bar holder 74 to be guided to the slit 70s of the corresponding bus bar 70. The electrode tab 53a that has passed through the slit 70s of the bus bar 70 is joined to the rear end of the bus bar 70. The bus bars 70 and the bus bar holder 74 located at the front end portion 52b can also be configured in the same manner as those at the rear end portion 52a. Of the bus bars 70 disposed at the rear end portion 52a, the bus bar 70 located at one end in the right-left direction (the right end in the present embodiment) includes a positive electrode terminal 70a (see FIG. 3) at its tip. Of the bus bars 70, the bus bar 70 located at the other end (the left end in the present embodiment) has a negative electrode terminal 70c (see FIG. 3) at its tip.

Bus bars 70D to 70F are disposed in order from right to left in the bus bar holder 74 provided at the rear end portions 52a of the battery cells 52. Bus bars 70G to 70H are disposed in order from right to left in the bus bar holder 74 provided at the front end portions 52b of the battery cells 52. The battery cells 52 include battery cells 52A to 52H arranged in order from right to left. The two battery cells 52A and 52B are connected to the bus bar 70D. The electrode tabs 53a of the four battery cells 52C to 52F are connected to the bus bar 70E. The electrode tabs 53a of the two battery cells 52G and 52H are connected to the bus bar 70F. The electrode tabs 53b of the four battery cells 52A to 52D are connected to the bus bar 70G. The electrode tabs 53b of the four battery cells 52E to 52H are connected to the bus bar 70H.

That is, the two battery cells 52A and 52B are connected in parallel with each other. The two battery cells 52C and 52D are connected in parallel with each other. The two battery cells 52E and 52F are connected in parallel with each other. The two battery cells 52G and 52H are connected in parallel with each other. The two battery cells 52A and 52B are connected in series with the two battery cells 52C and 52D, and the two battery cells 52C and 52D are connected in series with the two battery cells 52E and 52F. The two battery cells 52E and 52F are connected in series with the two battery cells 52G and 52H.

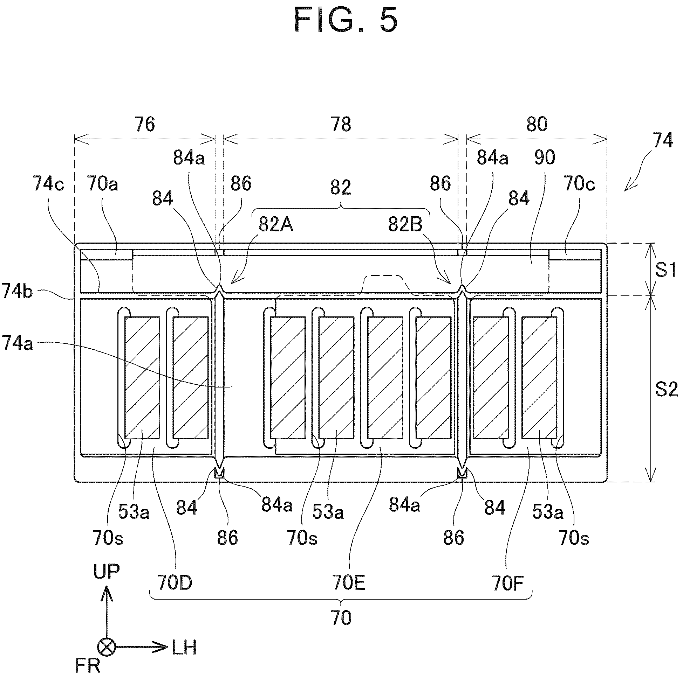

FIG. 5 illustrates the bus bar holder 74 and the bus bars 70 (70D to 70F). The battery cells 52 (not illustrated in FIG. 5) are arranged on the rear side of the bus bar holder 74, and the electrode tabs 53a of the battery cells 52 are joined to the bus bars 70. As illustrated in FIG. 5, the bus bar holder 74 includes a vertical wall 74a, a peripheral wall 74b, and a partition wall 74c. The vertical wall 74a faces the battery cells 52 in the front-rear direction. The peripheral wall 74b is a substantially rectangular flat plate member. The peripheral wall 74b extends rearward from the outer peripheral edge of the vertical wall 74a. The peripheral wall 74b surrounds the outer peripheral edge of the vertical wall 74a. The partition wall 74c extends from the right portion to the left portion of the peripheral wall 74b. The partition wall 74c divides the bus bar holder 74 into an upper portion S1 and a lower portion S2. The bus bars 70D to 70F are disposed on the vertical wall 74a. The bus bars 70D to 70F each extend from the upper portion S1 to the lower portion S2 of the bus bar holder 74. The partition wall 74c extends between the peripheral walls 74b across the bus bars 70D to 70F disposed on the vertical wall 74a. The slits 70s of the bus bars 70D to 70F are disposed in the lower portion S2 of the bus bar holder 74. The electrode tabs 53a of the battery cells 52 are inserted into the slits 70s and connected to the corresponding bus bars 70D to 70F, respectively. A flexible substrate 90 is attached to the upper portion S1 of the bus bar holder 74. The bus bars 70D to 70F are electrically connected to the flexible substrate 90. The flexible substrate 90 is a circuit board on which an electric circuit is formed, and is prepared to detect the electric potential of each of the bus bars 70D to 70F. The flexible substrate 90 is electrically connected to, for example, a battery ECU (Electronic Control Unit) (not illustrated) of the electrified vehicle 10.

As illustrated in FIGS. 5 to 7, the bus bar holder 74 includes a first holding portion 76, a second holding portion 78, a third holding portion 80, a plurality of low-rigidity portions 82A and 82B, and a plurality of stopper mechanisms 86. The first holding portion 76 holds the bus bar 70D. The second holding portion 78 holds the bus bar 70E. The third holding portion 80 holds the bus bar 70F. The low-rigidity portions 82 include a low-rigidity portion 82A and a low-rigidity portion 82B. The low-rigidity portion 82A is located between the first holding portion 76 and the second holding portion 78. The low-rigidity portion 82B is located between the second holding portion 78 and the third holding portion 80. The low-rigidity portions 82A and 82B (hereinafter referred to as the low-rigidity portions 82) are configured to have a rigidity that is lower than that of both the first holding portion 76 and the second holding portion 78. In a modification, the low-rigidity portions 82 may be configured to have a rigidity that is lower than that of either one of the first holding portion 76 and the second holding portion 78. The low-rigidity portions 82 are configured to be deformable along the right-left direction. Each low-rigidity portion 82 includes a pair of beams 84 configured to be elastically deformable along the right-left direction.

One of the beams 84 is provided on the partition wall 74c. The other of the beams 84 is provided on the lower side of the peripheral wall 74b. The beams 84 each include a protruding portion 84a that is curved or bent so as to protrude in the up-down direction. By way of example, each protruding portion 84a protrudes toward the outer side of the bus bar holder 74. The protruding portion 84a of one of the beams 84 protrudes upward, and the protruding portion 84a of the other of the beams 84 protrudes downward. The protruding direction of the protruding portion 84a is not limited to the up-down direction. For example, the protruding direction of the protruding portion 84a may be the front-rear direction. In another modification, the direction in which the protruding portion 84a protrudes is not limited to the outer side of the bus bar holder 74, and the protruding portion 84a may protrude toward the inner side.

The stopper mechanisms 86 are each located between two adjacent holding portions (76 and 78 and 78 and 80), of the holding portions 76, 78, and 80. The stopper mechanisms 86 inhibit or suppress each low-rigidity portion 82 from contracting beyond a predetermined value. In the bus bar holder 74, the positions of the stopper mechanisms 86 in the right-left direction are determined at substantially the same positions as the positions of the low-rigidity portions 82 in the right-left direction. In the present embodiment, the number of the stopper mechanisms 86 is two. One of the two stopper mechanisms 86 is located between the first holding portion 76 and the second holding portion 78. The other of the two stopper mechanisms 86 is located between the second holding portion 78 and the third holding portion 80.

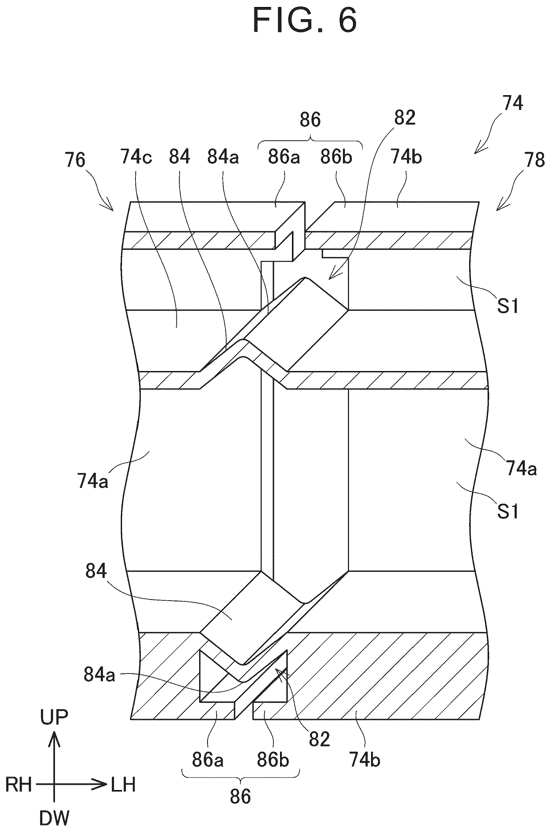

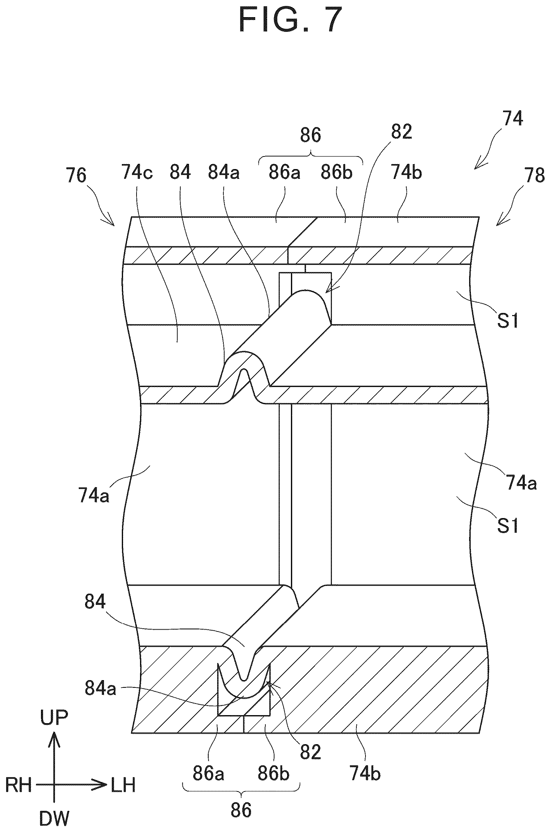

One of the two stopper mechanisms 86 includes a pair of abutment portions 86a and 86b. The abutment portions 86a and 86b include a first abutment portion 86a and a second abutment portion 86b. The first abutment portion 86a is disposed on the first holding portion 76 and protrudes from the left end of the vertical wall 74a of the first holding portion 76 toward the second holding portion 78. The second abutment portion 86b is disposed on the second holding portion 78 and protrudes from the right end of the vertical wall 74a of the second holding portion 78 toward the first holding portion 76. The first abutment portion 86a and the second abutment portion 86b move from a position where the first abutment portion 86a and the second abutment portion 86b are spaced apart from each other (see FIG. 6) to a position where the first abutment portion 86a and the second abutment portion 86b abut against each other (see FIG. 7), thereby inhibiting or suppressing contraction of the low-rigidity portion 82. The other of the two stopper mechanisms 86 includes a first abutment portion 86a and a second abutment portion 86b, similar to those of the one of the two stopper mechanisms 86, between the second holding portion 78 and the third holding portion 80.

When manufacturing a battery module 50 such as that of the present embodiment, it is necessary to constrain the pouch battery cells 52 disposed in a stack using a constraining device such as a case or a band while compressing the battery cells along the stacking direction (i.e., the right-left direction in the present embodiment). When the battery cells 52 are compressed along the stacking direction, compressive deformation occurs in each of the battery cells 52, causing the battery cells 52 to be displaced relative to each other along the stacking direction. At this time, the electrode tabs 53a and 53b connected to the bus bars 70 are also displaced relative to the bus bars 70, which creates a possibility that an unintended force acts on the electrode tabs 53a and 53b. In particular, the amount of displacement of the electrode tabs 53a and 53b relative to the bus bars 70 is greater as the number of the stacked battery cells is greater.

In the present embodiment, the bus bar holder 74 includes the low-rigidity portion 82, allowing the bus bars 70D and 70E, for example, held by the bus bar holder 74, to be relatively displaced in the right-left direction. By relatively displacing the bus bars 70D and 70E according to the relative displacement of the battery cells 52A and 52B connected to the bus bar 70D and the battery cells 52C to 52F connected to the bus bar 70E, the amount of displacement of the bus bars 70D and 70E relative to the electrode tab 53a can be suppressed. This makes it possible to suppress the application of an unintended force to the electrode tab 53a.

As illustrated in FIG. 4, in the battery module 50, the bus bar holder 74 attached to the front end portion 52b of the battery cells 52 also includes one low-rigidity portion 82 similar to that at the rear end portion 52a. The low-rigidity portion 82 is disposed in the bus bar holder 74 between the holding portion that holds the bus bar 70G and the holding portion that holds the bus bar 70H. Thus, it is possible to suppress the application of an unintended force to the electrode tab 53a also at the front end portion 52b of the battery cells 52. However, in a modification, the battery module 50 may not include the low-rigidity portion 82 at both the rear end portion 52a and the front end portion 52b of the battery cells 52. The low-rigidity portion 82 may be provided at either one of the rear end portion 52a and the front end portion 52b of the battery module 50. Furthermore, the number of low-rigidity portions 82 in one bus bar holder 74 is not limited to one or two, but may be three or more.

In the present embodiment, the low-rigidity portion 82 includes the beam 84 that extends between the first holding portion 76 and the second holding portion 78 (or between the second holding portion 78 and the third holding portion 80), and that is configured to be elastically deformable along the right-left direction. With such a configuration, it is possible to implement a low-rigidity portion 82 that has the desired characteristics (for example, the desired elasticity) with a relatively simple configuration.

In the present embodiment, the beam 84 is provided with the protruding portion 84a that is curved or bent so as to protrude in the up-down direction. With such a configuration, it is possible to implement a low-rigidity portion 82 that is significantly deformable with a relatively simple configuration.

In the present embodiment, the bus bar holder 74 includes a stopper that inhibits or suppresses the low-rigidity portion 82 from contracting beyond a predetermined value. The low-rigidity portion 82 of the bus bar holder 74 can exert its function and effect when the battery module 50 is manufactured. On the other hand, in the completed battery module 50, for example, deformation of the low-rigidity portion 82 may be inhibited or suppressed, thereby making it possible to suppress unnecessary vibration of the electrode tabs 53a and 53b, for example. In this regard, when the bus bar holder 74 includes the stopper mechanism 86 described above, deformation of the low-rigidity portion 82 can be inhibited or suppressed in the completed battery module 50, for example.

In the present embodiment, the stopper mechanism 86 includes the abutment portions 86a and 86b that abut against each other when the low-rigidity portion 82 contracts to the predetermined value. With such a configuration, the stopper mechanism 86 having the above function can be implemented with a relatively simple configuration.

In the present embodiment, the battery module 50 includes the flexible substrate 90 attached to the bus bar holder 74 and connected to each of the bus bars 70. With such a configuration, it is possible to suppress deformation of the low-rigidity portion 82 of the bus bar holder 74 being hindered by the circuit board.

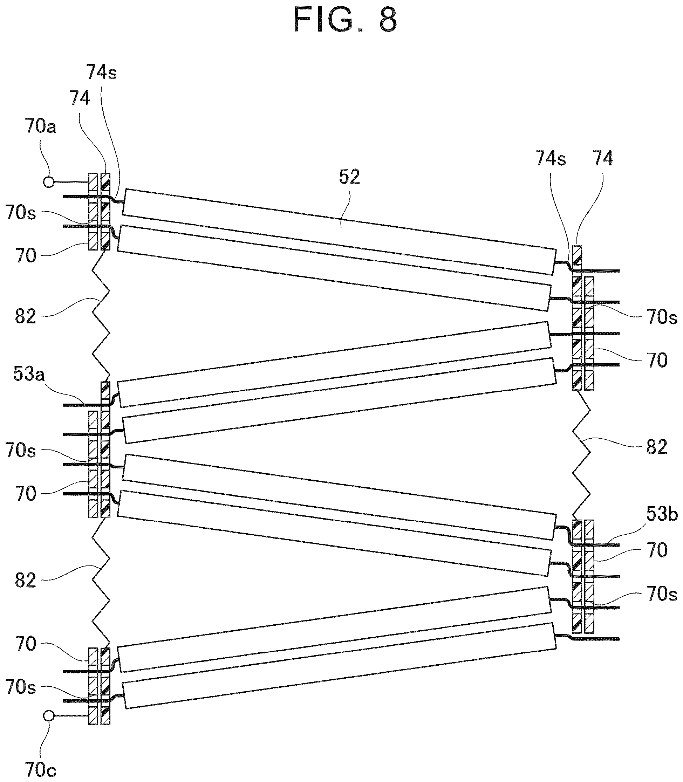

An example of a method of manufacturing the battery module 50 will be described with reference to FIGS. 8 to 11. As illustrated in FIG. 8, first, a plurality of battery cells 52 and two bus bar holders 74 that hold a plurality of bus bars 70 are prepared. Next, the bus bar holders 74 are disposed at both end portions of the battery cells 52. Next, a plurality of electrode tabs 53a and 53b of the battery cells 52 is inserted into corresponding slits 74s of the bus bar holders 74 and slits 70s of the bus bars 70.

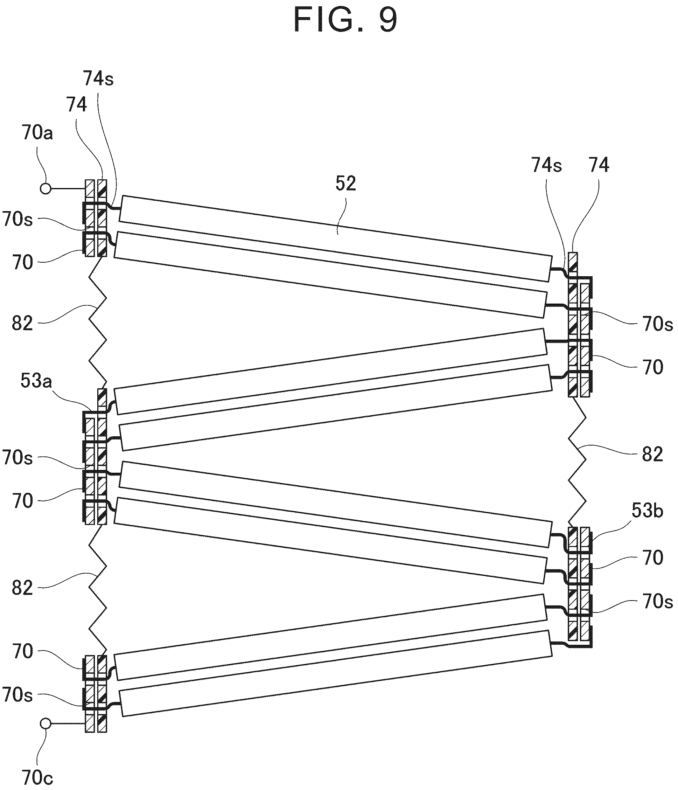

As illustrated in FIG. 9, the electrode tabs 53a and 53b inserted into the bus bar holders 74 and the bus bars 70 in FIG. 8 are welded to the bus bars 70, respectively.

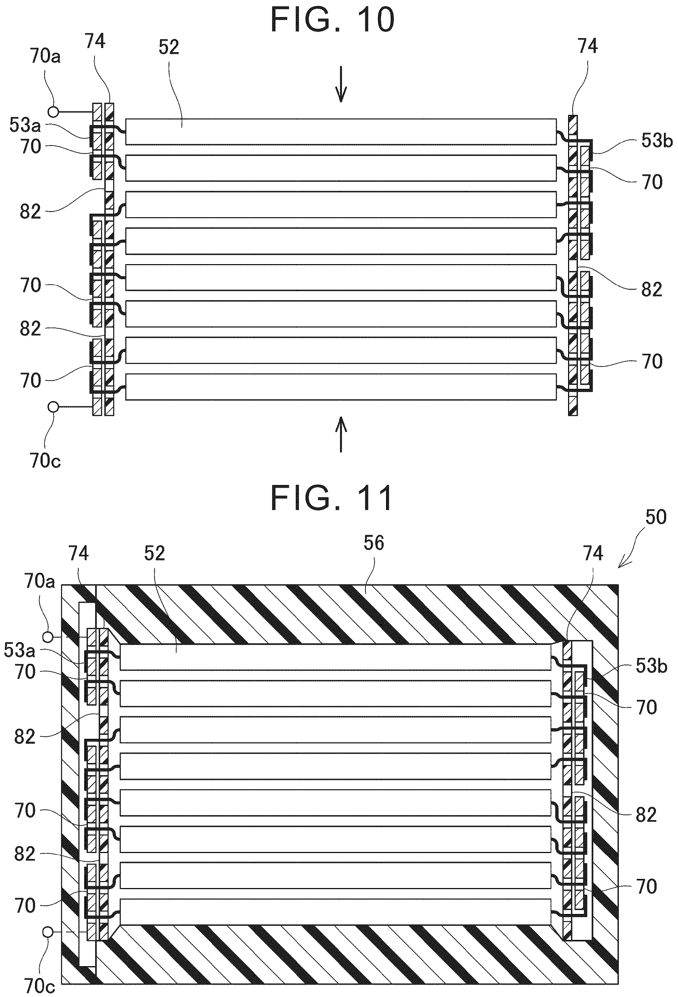

As illustrated in FIG. 10, the battery cells 52, the electrode tabs 53a and 53b of which are welded to the corresponding bus bars 70 in FIG. 9, are compressed in the stacking direction. The compressed battery cells 52 are constrained using a constraining band while in the compressed state.

Finally, as illustrated in FIG. 11, the battery cells 52 compressed in FIG. 10 are housed in a module casing 56. A battery module 50 is manufactured in the manner described above.

The right-left direction is an example of a "first direction" according to the technology in the present specification. The up-down direction is an example of a "second direction" according to the technology in the present specification. The first holding portion 76 and the second holding portion 78, and the second holding portion 78 and the third holding portion 80, are respective examples of the "first holding portion" and the "second holding portion" according to the technology in the present specification. The beam 84 is an example of a "beam" according to the technology in the present specification.

Although the embodiment of the present technology has been described in detail above, this is merely exemplary and does not limit the scope of the claims. The technology set forth in the claims includes various modifications and alterations of the specific example indicated above.

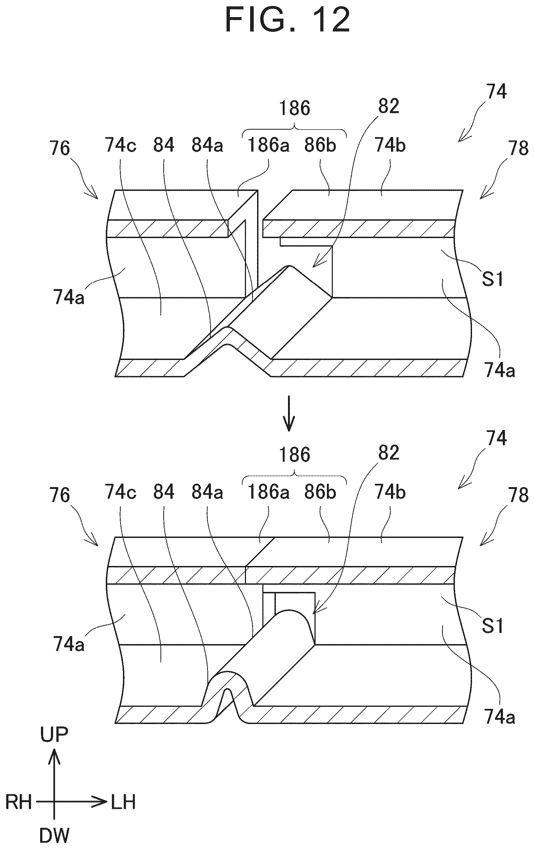

The configuration of the bus bar holder 74 can be modified in various ways. In a modification, as illustrated in FIG. 12, a stopper mechanism 186 may not include the pair of abutment portions 86a and 86b. The stopper mechanism 186 of the bus bar holder 74 may include a first abutment portion 186a and the second abutment portion 86b that is similar to that of the first embodiment. The first abutment portion 186a may not protrude from the right end of the vertical wall 74a of the first holding portion 76 toward the second holding portion 78. That is, the position of the right end of the first abutment portion 186a in the right-left direction may be the same as the position of the right end of the vertical wall 74a in the right-left direction. The second abutment portion 86b may protrude from the right end of the vertical wall 74a of the second holding portion 78 toward the first holding portion 76 to a greater degree since the first abutment portion 186a does not protrude compared to the first embodiment. Also with this configuration, the stopper mechanism 186 can inhibit or suppress deformation of the low-rigidity portion 82.

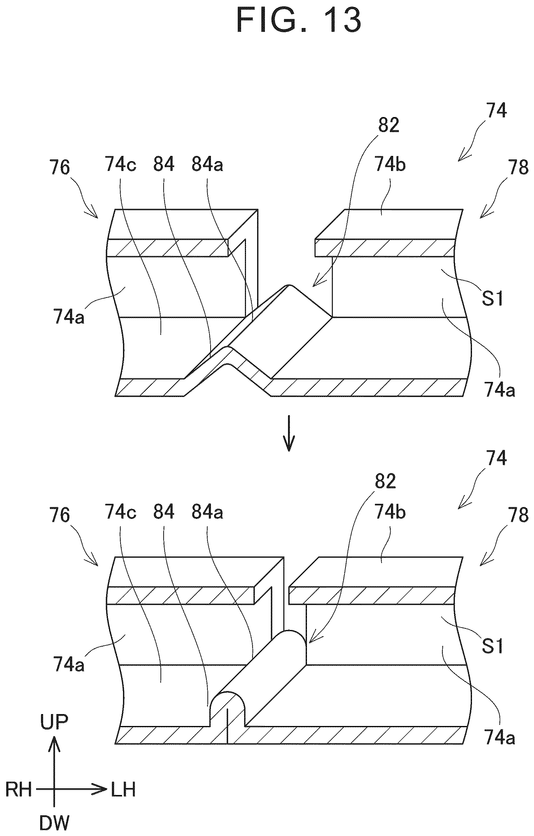

In another modification, as illustrated in FIG. 13, the bus bar holder 74 may not include the stopper mechanism 86. With this configuration, the low-rigidity portion 82 can suppress the application of an unintended force to the electrode tabs 53a and 53b.

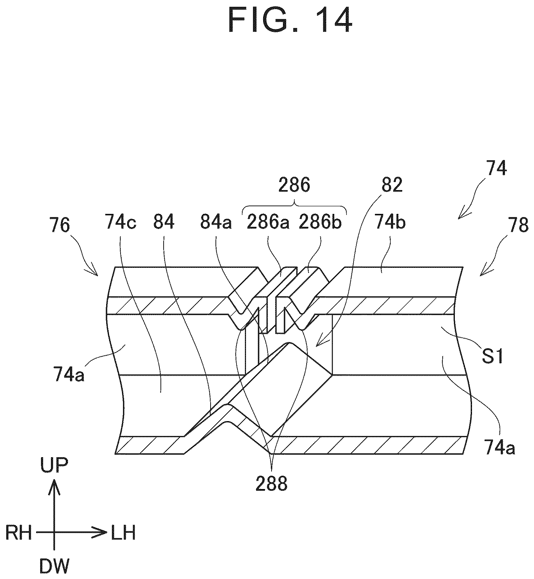

In another modification, as illustrated in FIG. 14, the bus bar holder 74 may further include a pair of second low-rigidity portions 288 between the first holding portion 76 and the second holding portion 78, the second low-rigidity portions 288 being configured to have a rigidity that is lower than that of at least one of the first holding portion 76 and the second holding portion 78. The second low-rigidity portions 288 may be configured to be deformable along the right-left direction. The second low-rigidity portions 288 may be formed in a stopper mechanism 286. The stopper mechanism 286 includes a pair of abutment portions 286a and 286b each including the second low-rigidity portion 288. Otherwise, the stopper mechanism 286 can be configured similarly to the stopper mechanism 86 of the first embodiment. The second low-rigidity portion 288 may be configured to be deformable in the right-left direction even in a state in which the contraction of the low-rigidity portion 82 is inhibited by the stopper mechanism 286. With such a configuration, in the completed battery module 50, for example, the second low-rigidity portion 288 can be passively deformed in response to expansion or contraction of the battery cells 52 that occurs during use.

In another modification, the beam 84 of the bus bar holder 74 may not be provided with a protruding portion that is curved or bent so as to protrude in a direction (up-down direction or front-rear direction) that is orthogonal to the right-left direction. For example, the beam 84 may be provided with a reduced portion, the cross section of which that is orthogonal to the right-left direction is locally reduced. With such a configuration, the low-rigidity portion 82 can be provided with the desired characteristics by adjusting the size of the reduced portion, such as the length or the cross-sectional area, for example. There may be provided a reduced portion, the cross section of which that is orthogonal to the right-left direction is locally reduced. With such a configuration, the low-rigidity portion 82 can be provided with the desired characteristics by adjusting the size of the reduced portion, such as the length or the cross-sectional area, for example.

In another modification, the first holding portion 76, the second holding portion 78, and the third holding portion 80 of the bus bar holder 74 may not be formed from a single member. For example, the bus bar holder 74 may include a first holder member that holds the first holding portion 76, a second holder member that holds the second holding portion 78, and a third holder member that holds the third holding portion 80. In this case, the first holder member and the second holder member may be coupled so as to be relatively displaceable along the right-left direction, thereby constituting the low-rigidity portion 82. In this way, the bus bar holder 74 may be constituted from a combination of a plurality of members, rather than from a single member.

The technical elements described in the present specification or the drawings exhibit technical utility either alone or in various combinations, and are not limited to the combinations set forth in the claims as originally filed. Furthermore, the technology indicated in the present specification or the drawings can achieve a plurality of objects at the same time, and achieving one of the objects has in itself technical utility.

## Claims

1. A battery module (50) comprising:
a first pouch battery cell (52) and a second pouch battery cell (52), the first pouch battery cell and the second pouch battery cell being stacked along a first direction, and each of the first pouch battery cell and the second pouch battery cell include electrode tabs (70a,70c);
a first bus bar and a second bus bar (70) arranged along the first direction, one of the first bus bar and the second bus bar being connected to an electrode tab of the first pouch battery cell and the other of the first bus bar and the second bus bar being connected to an electrode tab of the second pouch battery cell; and
a bus bar holder (74) configured to hold the first bus bar and the second bus bar, wherein
the bus bar holder includes:
a first holding portion (76) configured to hold the first bus bar;
a second holding portion (78) configured to hold the second bus bar; and
a low-rigidity portion (82A,82B) located between the first holding portion and the second holding portion and configured to have a rigidity that is lower than a rigidity of at least one of the first holding portion and the second holding portion.

2. The battery module (50) according to claim 1, wherein the low-rigidity portion (82A,82B) includes a beam (84) that extends between the first holding portion (76) and the second holding portion (78), and that is configured to be elastically deformed along the first direction.

3. The battery module (50) according to claim 2, wherein the beam (84) has a protruding portion (84a) that is curved or bent so as to protrude in a second direction that is orthogonal to the first direction.

4. The battery module (50) according to any one of claims 1 to 3, wherein:
the bus bar holder (74) includes a first holder member that includes the first holding portion (76) and a second holder member that includes the second holding portion (78);
the first holder member and the second holder member are coupled so as to be relatively displaceable along the first direction; and
the low-rigidity portion (82A,82B) is constituted by the coupling.

5. The battery module (50) according to any one of claims 1 to 4, wherein the bus bar holder (74) includes a stopper mechanism (86, 186, 286) that inhibits or suppresses the low-rigidity portion (82A,82B) from contracting beyond a predetermined value.

6. The battery module (50) according to claim 5, wherein the stopper mechanism (86, 186, 286) includes a pair of abutment portions (86a,86b,186a,286a,286b) that abut against each other when the low-rigidity portion (82A,82B) contracts to the predetermined value.

7. The battery module (50) according to claim 5, wherein:
the bus bar holder (74) further includes a second low-rigidity portion (288) located between the first holding portion (76) and the second holding portion (78), the second low-rigidity portion being configured to have a rigidity that is lower than a rigidity of at least one of the first holding portion and the second holding portion; and
the second low-rigidity portion is configured to be deformed along the first direction even in a state in which the contraction of the low-rigidity portion is inhibited by the stopper mechanism (86, 186, 286).

8. The battery module (50) according to any one of claims 1 to 7, further comprising a circuit board (90) attached to the bus bar holder (74) and connected to each of the first bus bar and the second bus bar, wherein
at least a part of the circuit board is constituted from a flexible circuit board.
